# EUROPEAN PATENT APPLICATION

(11) **EP 4 502 425 A1**
(43) Date of publication of application: **05.02.2025**
(21) Application number: 23852456.5
(22) Date of filing: 02.08.2023
(51) Int. Cl.: F16H 48/38

(54) **VEHICULAR DRIVE DEVICE**

(30) Priority: 12.08.2022 JP 2022128806
(71) Applicant: AISIN CORPORATION, Kariya-shi, Aichi 448-8650 (JP)
(72) Inventor: DEGUCHI, Tsubasa, Kariya-shi, Aichi 448-8650 (JP); KATO, Mitsuhiko, Kariya-shi, Aichi 448-8650 (JP); ITO, Tatsuya, Kariya-shi, Aichi 448-8650 (JP); TAKAHASHI, Ryota, Kariya-shi, Aichi 448-8650 (JP)
(74) Representative: Kramer Barske Schmidtchen Patentanwälte PartG mbB
(86) International application number: PCT/JP2023/028267
(87) International publication number: WO 2024/034489

(57) **Abstract**

A differential gear mechanism (6) housed in a differential case (5) includes a shaft member (61), a plurality of first bevel gears (62) rotatably supported by the shaft member (61), and a pair of second bevel gears (63) meshing with the plurality of first bevel gears (62). Assuming that one of the pair of second bevel gears (63) that is disposed on a second axial side (L2) with respect to the shaft member (61) is a specific bevel gear (63 S) and one of a pair of output shafts (2) that rotates integrally with the specific bevel gear (63 S) is a specific output shaft (2S), the specific bevel gear (63 S) is supported on the differential case (5) in an axial direction (L) and is not supported on the differential case (5) in a radial direction (R), and an engaging portion (2a) provided on the specific output shaft (2S) and an engaged portion (6a) provided on the specific bevel gear (63S) engage with each other so as to restrict relative movement in a circumferential direction (C) and the radial direction (R) between the specific output shaft (2S) and the specific bevel gear (63S).

## Description

### TECHNICAL FIELD

The present invention relates to a vehicle drive device including an input member drivingly connected to a driving force source, a pair of output shafts drivingly connected to wheels, a speed reducer that reduces the speed of rotation of the input member, and a differential gear device that distributes the rotation of the input member transmitted via the speed reducer to the pair of output shafts.

### BACKGROUND ART

An example of such a vehicle drive device is disclosed in Patent Document 1 below. In the following description of the background art, signs used in Patent Document 1 are shown in parentheses.

A differential gear device (5) of a vehicle drive device (1) of Patent Document 1 includes a differential case (50) and a differential gear mechanism housed in the differential case. The differential gear mechanism includes a shaft member (51) formed so as to extend along a radial direction, a first bevel gear (52) rotatably supported by the shaft member, and a pair of second bevel gears (54A, 54B) disposed separately on both axial sides of the shaft member (51) and meshing with the first bevel gear (52). One second bevel gear (54A) is connected to a first drive shaft (9A) so as to rotate integrally with the first drive shaft (9A), and the other second bevel gear (54B) is connected to a second drive shaft (9B) so as to rotate integrally with the second drive shaft (9B).

### Related Art Documents

### Patent Documents

Patent Document 1: Japanese Unexamined Patent Application Publication No. 2021-107737 (JP 2021-107737 A)

### SUMMARY OF THE INVENTION

### Problem to be Solved by the Invention

In the above vehicle drive device (1), the other second bevel gear (54B) includes a bevel tooth portion that meshes with the first bevel gear (52), a bevel tooth support portion that is formed integrally with the bevel tooth portion and supports the bevel tooth portion, and a tubular shaft portion (540) formed in a tubular shape and extending from the bevel tooth support portion to one side in the axial direction (left side in FIG. 4 of Patent Document 1).

The tubular shaft portion (540) is supported from an outer side in the radial direction by a differential case tubular portion (72) provided to the differential case (50). The bevel tooth support portion is supported in the axial direction against the inner surface of the differential case (50) via a washer inserted to the tubular shaft portion (540). In this way, the other second bevel gear (54B) is supported in the axial direction in addition to the radial direction. Therefore, the axial dimension of the other second bevel gear (54B) is likely to increase.

The tubular shaft portion (540) is connected to the second drive shaft (9B) disposed on an inner side in the radial direction with respect to the tubular shaft portion (540) so as to rotate integrally with the second drive shaft (9B). Specifically, the tubular shaft portion (540) includes an engaged portion that is connected by spline engagement to an engaging portion formed at the tip of the second drive shaft (9B), and a fitting portion to which a portion of the second drive shaft (9B) adjacent to the engaging portion in the axial direction is fitted. In this way, relative rotation of the tubular shaft portion (540) to the second drive shaft (9B) is restricted by the engaged portion, and misalignment or inclination between a rotation axis of the other second bevel gear (54B) and a rotation axis of the second drive shaft (9B) is restricted by the fitting portion. In this way, the tubular shaft portion (540) is structured such that the engaged portion and the fitting portion are arranged in the axial direction. Therefore, the axial dimension of the other second bevel gear (54B) is likely to increase.

The above configuration of the second bevel gear leads to an increase in size of the vehicle drive device. Therefore, it is desirable to realize a vehicle drive device that is easily downsized in a configuration including a bevel gear type differential gear device.

### Means for Solving the Problem

A characteristic configuration of a vehicle drive device in view of the above includes: an input member drivingly connected to a driving force source; a pair of output shafts drivingly connected to wheels; a speed reducer configured to reduce a speed of rotation of the input member; and a differential gear device configured to distribute the rotation of the input member transmitted via the speed reducer to the pair of output shafts, in which, assuming that an axial direction is a direction along an output rotation axis that is a rotation axis of the pair of output shafts, a first axial side is one side in the axial direction, a second axial side is the other side in the axial direction, a radial direction is a direction orthogonal to the output rotation axis, and a circumferential direction is a direction about the output rotation axis, the differential gear device includes a differential case and a differential gear mechanism housed in the differential case, the differential gear mechanism includes a shaft member formed so as to extend along the radial direction, a plurality of first bevel gears rotatably supported by the shaft member and disposed separately in the circumferential direction, and a pair of second bevel gears disposed separately on both sides of the shaft member in the axial direction and meshing with the plurality of first bevel gears, the pair of second bevel gears is connected to the pair of output shafts so as to rotate integrally with the pair of output shafts, and assuming that one of the pair of second bevel gears that is disposed on the second axial side with respect to the shaft member is a specific bevel gear and one of the pair of output shafts that rotates integrally with the specific bevel gear is a specific output shaft, an engaging portion provided on the specific output shaft and an engaged portion provided on the specific bevel gear engage with each other so as to restrict relative movement in the circumferential direction and the radial direction between the specific output shaft and the specific bevel gear, and the specific bevel gear is supported on the differential case in the axial direction and is not supported on the differential case in the radial direction.

In this characteristic configuration, the specific bevel gear is not supported on the differential case in the radial direction, and is supported in the radial direction by an aligning action caused by meshing between the specific bevel gear and the plurality of first bevel gears. Therefore, there is no need to provide a bearing or a fitting portion for supporting the specific bevel gear on the differential case in the radial direction.
In this characteristic configuration, the engaging portion of the specific output shaft and the engaged portion of the specific bevel gear restrict the relative movement in the circumferential direction and the radial direction. Therefore, there is no need to provide the specific bevel gear with a fitting portion to which the specific output shaft is fitted and that restricts misalignment or inclination between the rotation axis of the specific output shaft and the rotation axis of the specific bevel gear.
As described above, with this characteristic configuration, the support structure for supporting the specific bevel gear and the specific output shaft on the differential case can be downsized easily. Therefore, the vehicle drive device can easily be downsized in the configuration including the bevel gear type differential gear device.

### BRIEF DESCRIPTION OF THE DRAWINGS

[FIG. 1] FIG. 1 is a sectional view taken along an axial direction of a vehicle drive device according to an embodiment.
[FIG. 2] FIG. 2 is a skeleton diagram of the vehicle drive device according to the embodiment.
[FIG. 3] FIG. 3 is a partially enlarged sectional view taken along the axial direction of the vehicle drive device according to the embodiment.

### MODES FOR CARRYING OUT THE INVENTION

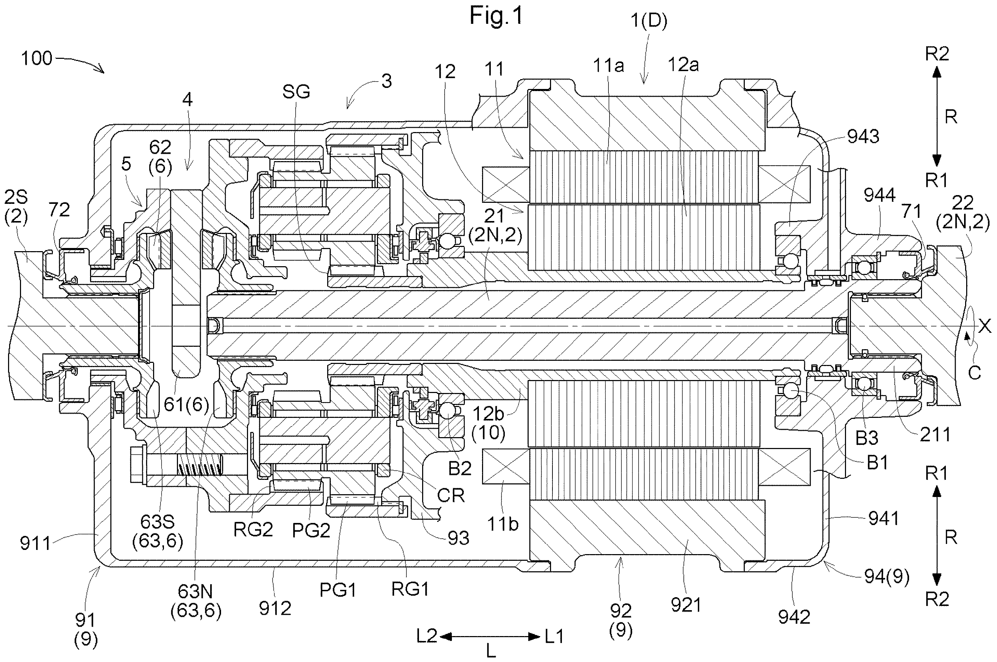

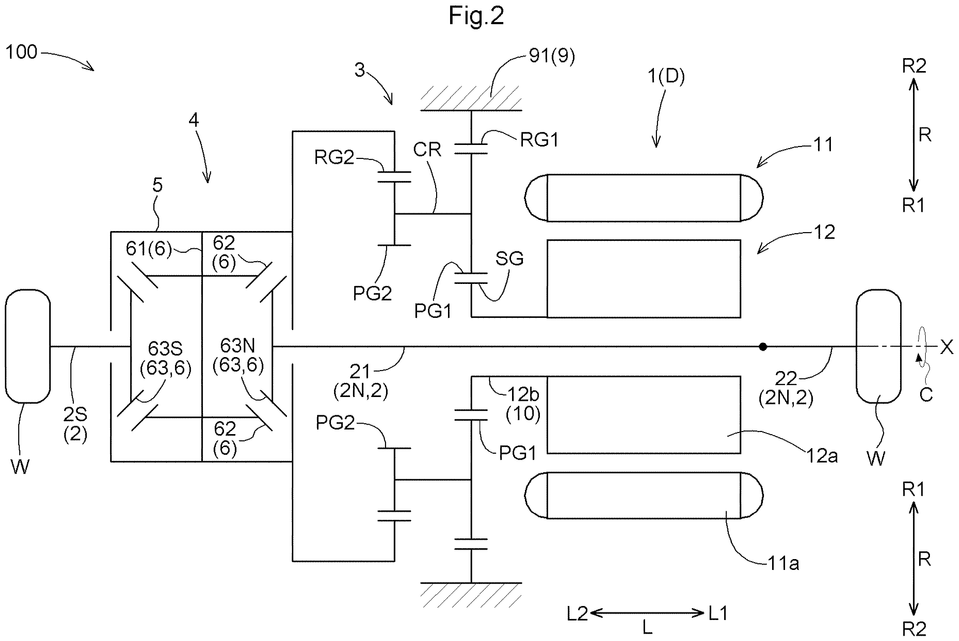

Hereinafter, a vehicle drive device 100 according to an embodiment will be described with reference to the drawings.
As shown in FIGS. 1 and 2, the vehicle drive device 100 includes an input member 10 drivingly connected to a driving force source D, a pair of output shafts 2 drivingly connected to wheels W (see FIG. 2), a speed reducer 3 that reduces the speed of rotation of the input member 10, and a differential gear device 4 that distributes the rotation of the input member 10 transmitted via the speed reducer 3 to the pair of output shafts 2.

In the following description, a direction along an output rotation axis X that is a rotation axis of the pair of output shafts 2 will be referred to as "axial direction L." One side in the axial direction L will be referred to as "first axial side L1" and the other side in the axial direction L will be referred to as "second axial side L2." A direction orthogonal to the output rotation axis X will be referred to as "radial direction R." In the radial direction R, the side of the output rotation axis X will be referred to as "radially inner side R1" and the opposite side will be referred to as "radially outer side R2." A direction about the output rotation axis X will be referred to as "circumferential direction C."

In the present embodiment, the input member 10, the pair of output shafts 2, the speed reducer 3, and the differential gear device 4 are disposed coaxially. That is, the input member 10, the pair of output shafts 2, the speed reducer 3, and the differential gear device 4 are disposed on the output rotation axis X. In the present embodiment, the input member 10, the speed reducer 3, and the differential gear device 4 are disposed in the stated order from the first axial side L1 to the second axial side L2.

In the present embodiment, the vehicle drive device 100 further includes an outer case 9 that houses the input member 10, the speed reducer 3, and the differential gear device 4. In the present embodiment, the outer case 9 includes a first case member 91, a second case member 92, a support member 93, and a cover member 94.

The first case member 91 includes a first side wall portion 911 and a first peripheral wall portion 912. The first side wall portion 911 is formed so as to extend along the radial direction R. The first side wall portion 911 is disposed so as to cover the differential gear device 4 from the second axial side L2. The first peripheral wall portion 912 is formed in a tubular shape having an axis along the axial direction L. The first peripheral wall portion 912 is disposed so as to cover the speed reducer 3 and the differential gear device 4 from the radially outer side R2. In the illustrated example, the first side wall portion 911 and the first peripheral wall portion 912 are integrally formed so that the end of the first side wall portion 911 on the radially outer side R2 and the end of the first peripheral wall portion 912 on the second axial side L2 are connected. That is, the first case member 91 is formed in a bottomed tubular shape that is open to the first axial side L1.

The second case member 92 is structured as a separate member from the first case member 91. The second case member 92 is joined to the first case member 91 from the first axial side L1. The second case member 92 includes a second peripheral wall portion 921. The second peripheral wall portion 921 is formed in a tubular shape having an axis along the axial direction L. The second peripheral wall portion 921 is disposed so as to cover a rotary electric machine 1 from the radially outer side R2. The second peripheral wall portion 921 is joined to the first peripheral wall portion 912 of the first case member 91 from the first axial side L1.

The support member 93 is structured as a separate member from the first case member 91 and the second case member 92. The support member 93 is formed so as to extend along the radial direction R. The support member 93 is disposed so as to partition the inside of the outer case 9 in the axial direction L into a disposition area of the rotary electric machine 1 and a disposition area of the speed reducer 3 and the differential gear device 4. That is, the support member 93 is disposed between the rotary electric machine 1 and the speed reducer 3 in the axial direction L. The support member 93 is fixed to the first case member 91. In the present embodiment, the support member 93 is fixed to the first peripheral wall portion 912 so as to extend to the radially inner side R1 with respect to the first peripheral wall portion 912.

The cover member 94 is structured as a separate member from the first case member 91, the second case member 92, and the support member 93. The cover member 94 includes a second side wall portion 941 and a third peripheral wall portion 942. The second side wall portion 941 is formed so as to extend along the radial direction R. The second side wall portion 941 is disposed so as to cover the rotary electric machine 1 from the first axial side L1. The third peripheral wall portion 942 is formed in a tubular shape having an axis along the axial direction L. The third peripheral wall portion 942 is joined to the second peripheral wall portion 921 of the second case member 92 from the first axial side L1. In the illustrated example, the second side wall portion 941 and the third peripheral wall portion 942 are integrally formed so that the end of the second side wall portion 941 on the radially outer side R2 and the end of the third peripheral wall portion 942 on the first axial side L1 are connected. That is, the cover member 94 is formed in a bottomed tubular shape that is open to the second axial side L2.

In the present embodiment, the driving force source D is the rotary electric machine 1 including a stator 11 and a rotor 12. The rotary electric machine 1 functions as a driving force source for the pair of wheels W (see FIG. 2). The rotary electric machine 1 has a function as a motor (electric motor) that receives supply of electric power to generate driving force, and a function as a generator (electric power generator) that receives supply of driving force to generate electric power. Specifically, the rotary electric machine 1 is electrically connected to a power storage device such as a battery or a capacitor (not shown). The rotary electric machine 1 generates a driving force by power running with electric power stored in the power storage device. The rotary electric machine 1 generates electric power with a driving force transmitted from the pair of wheels W to charge the power storage device.

As shown in FIG. 1, the stator 11 of the rotary electric machine 1 includes a cylindrical stator core 11a. The stator core 11a is fixed to the outer case 9 (in this case, the second peripheral wall portion 921 of the second case member 92). The rotor 12 of the rotary electric machine 1 includes a cylindrical rotor core 12a. The rotor core 12a is supported so as to be rotatable relative to the stator core 11a. The rotor core 12a is connected to a rotor shaft 12b so as to rotate integrally with the rotor shaft 12b. In the present embodiment, the rotor shaft 12b corresponds to the input member 10.

The rotor shaft 12b is formed in a tubular shape coaxial with the rotor core 12a. In the present embodiment, the rotor shaft 12b is disposed so as to protrude from the rotor core 12a to both sides in the axial direction L. A portion of the rotor shaft 12b that protrudes from the rotor core 12a to the first axial side L1 is rotatably supported on a first support portion 943 of the cover member 94 of the outer case 9 via a first bearing B1. In the example shown in FIG. 1, the first support portion 943 is formed in a tubular shape that protrudes from the second side wall portion 941 to the second axial side L2 and covers the rotor shaft 12b from the radially outer side R2. The first bearing B1 is disposed between the first support portion 943 and the rotor shaft 12b in the radial direction R. In the present embodiment, a portion of the rotor shaft 12b that protrudes from the rotor core 12a to the second axial side L2 is disposed so as to extend through the support member 93 of the outer case 9 in the axial direction L. The portion of the rotor shaft 12b that protrudes from the rotor core 12a to the second axial side L2 is supported so as to be rotatable relative to the support member 93 via a second bearing B2.

In the present embodiment, the rotary electric machine 1 is an inner rotor type rotary electric machine. Therefore, the rotor core 12a is disposed on the radially inner side R1 of the stator core 11a. The rotor shaft 12b is disposed on the radially inner side R1 of the rotor core 12a.

In the present embodiment, the rotary electric machine 1 is a revolving field type rotary electric machine. Therefore, the stator 11 further includes a stator coil 11b. In the present embodiment, the stator coil 11b is wound around the stator core 11a so as to form coil end portions protruding from the stator core 11a to both sides in the axial direction L. Although illustration is omitted, the rotor core 12a is provided with permanent magnets.

In the present embodiment, the speed reducer 3 is a planetary gear mechanism including a sun gear SG, a carrier CR, a first ring gear RG1, and a second ring gear RG2.

In the present embodiment, the sun gear SG is connected to the rotor 12 so as to rotate integrally with the rotor 12. In the example shown in FIG. 1, the sun gear SG is connected to the rotor shaft 12b by welding etc. so as to rotate integrally with the rotor shaft 12b.

In the present embodiment, the carrier CR rotatably supports first pinion gears PG1 and second pinion gears PG2. The first pinion gears PG1 and the second pinion gears PG2 are connected so as to rotate integrally with each other. The first pinion gears PG1 mesh with the sun gear SG and the first ring gear RG1. The second pinion gears PG2 mesh with the second ring gear RG2. The second pinion gear PG2 has a smaller diameter than the first pinion gear PG1.

In the present embodiment, the first ring gear RG1 is fixed to the outer case 9. In the example shown in FIG. 1, the first ring gear RG1 is fixed to the support member 93 of the outer case 9.

The differential gear device 4 includes a differential case 5 and a differential gear mechanism 6 housed in the differential case 5. The differential gear device 4 is a bevel gear type differential gear device.

The differential case 5 rotates about the output rotation axis X. The differential case 5 is an input element of the differential gear device 4. In the present embodiment, the differential case 5 is connected to the second ring gear RG2 of the speed reducer 3 by welding etc. so as to rotate integrally with the second ring gear RG2.

The differential gear mechanism 6 includes shaft members 61, a plurality of first bevel gears 62, and a pair of second bevel gears 63.

The shaft members 61 are supported by the differential case 5 so as to rotate integrally with the differential case 5. The shaft members 61 are formed so as to extend along the radial direction R. In the present embodiment, the shaft members 61 are radially formed along the radial direction R (e.g., formed in a cross shape in an axial view along the axial direction L).

The plurality of first bevel gears 62 is disposed separately in the circumferential direction C. The plurality of first bevel gears 62 is rotatably supported by the shaft members 61. More specifically, each of the plurality of first bevel gears 62 is rotatable (spinnable) about its own axis and rotatable (revolvable) about the output rotation axis X. In this example, four first bevel gears 62 are provided.

The pair of second bevel gears 63 is disposed separately on both sides of the shaft members 61 in the axial direction L. The pair of second bevel gears 63 meshes with the plurality of first bevel gears 62. The pair of second bevel gears 63 rotates about the output rotation axis X. The pair of second bevel gears 63 is connected to the pair of output shafts 2 so as to rotate integrally with the pair of output shafts 2.

In the following description, one of the pair of second bevel gears 63 that is disposed on the second axial side L2 with respect to the shaft members 61 will be referred to as "specific bevel gear 63S." One of the pair of second bevel gears 63 that is disposed on the first axial side L1 with respect to the shaft members 61 will be referred to as "non-specific bevel gear 63N." One of the pair of output shafts 2 that rotates integrally with the specific bevel gear 63S will be referred to as "specific output shaft 2S." One of the pair of output shafts 2 that rotates integrally with the non-specific bevel gear 63N will be referred to as "non-specific output shaft 2N."

In the present embodiment, the specific output shaft 2S is a drive shaft. The non-specific output shaft 2N includes a transmission shaft 21 and a drive shaft 22.

The transmission shaft 21 is connected to the non-specific bevel gear 63N so as to rotate integrally with the non-specific bevel gear 63N. In the example shown in FIG. 1, the transmission shaft 21 is inserted from the first axial side L1 to the radially inner side R1 of the non-specific bevel gear 63N and is connected to the non-specific bevel gear 63N by spline engagement.

The transmission shaft 21 is connected to the drive shaft 22 so as to rotate integrally with the drive shaft 22. In the present embodiment, the transmission shaft 21 includes a connection portion 211 connected to the drive shaft 22. The connection portion 211 is disposed at an end of the transmission shaft 21 on the first axial side L1. The connection portion 211 is formed in a tubular shape that is open to the first axial side L1. In the example shown in FIG. 1, the drive shaft 22 is inserted from the first axial side L1 to the radially inner side R1 of the connection portion 211 and they are connected to each other by spline engagement.

In the present embodiment, the connection portion 211 is rotatably supported on a second support portion 944 of the cover member 94 of the outer case 9 via a third bearing B3. In the example shown in FIG. 1, the second support portion 944 is formed in a tubular shape that protrudes from the second side wall portion 941 to the first axial side L1 and covers the connection portion 211 from the radially outer side R2. The third bearing B3 is disposed between the second support portion 944 and the connection portion 211 in the radial direction R.

In the present embodiment, a first seal member 71 is provided between the connection portion 211 and the second support portion 944 in the radial direction R. The first seal member 71 is disposed so as to provide an oil-tight seal between the outer peripheral surface of the connection portion 211 and the inner peripheral surface of the second support portion 944.

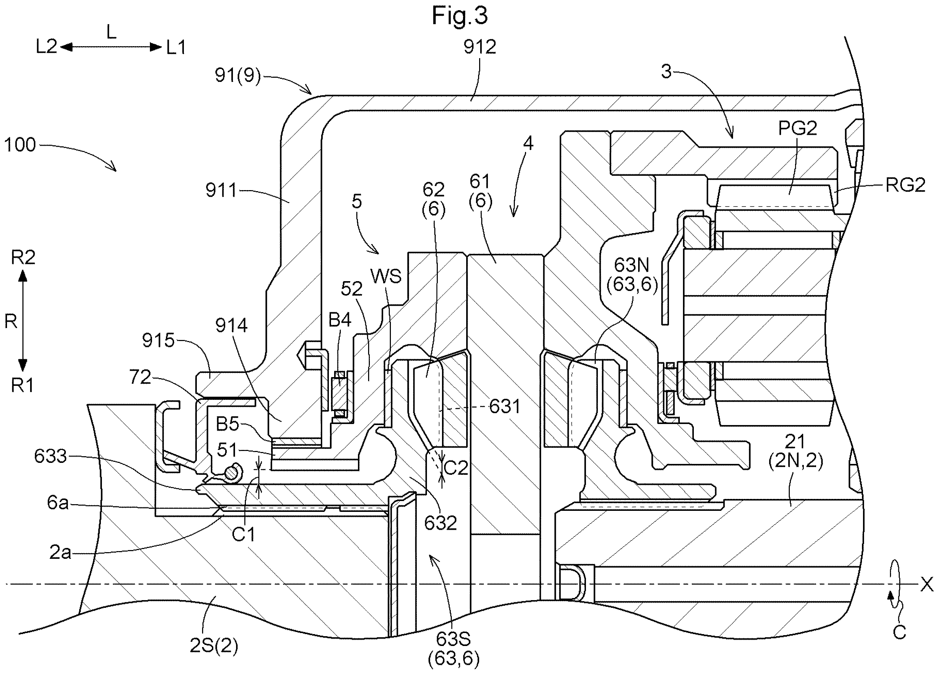

As shown in FIG. 3, in the present embodiment, the specific bevel gear 63S includes a bevel tooth portion 631, a bevel tooth support portion 632, and a tubular shaft portion 633.

The bevel tooth portion 631 is formed so as to mesh with the plurality of first bevel gears 62. The bevel tooth portion 631 is composed of a plurality of teeth disposed at equal intervals in the circumferential direction C.

The bevel tooth support portion 632 supports the bevel tooth portion 631. The bevel tooth support portion 632 is formed integrally with the bevel tooth portion 631. More specifically, the bevel tooth support portion 632 has a surface in the shape of a side surface of a truncated cone oriented to the first axial side L1 and the radially outer side R2, and the bevel tooth portion 631 is formed on this surface. In the present embodiment, the bevel tooth support portion 632 is supported so as to be rotatable relative to the differential case 5 via a washer WS disposed between a surface of the bevel tooth support portion 632 that is oriented to the second axial side L2 and a portion of the inner surface of the differential case 5 that is oriented to the first axial side L1. In this way, the specific bevel gear 63S is supported on the differential case 5 in the axial direction L.

The tubular shaft portion 633 is formed in a tubular shape extending from the bevel tooth support portion 632 to the second axial side L2. In the example shown in FIG. 3, the tubular shaft portion 633 is formed integrally with the bevel tooth support portion 632.

In the present embodiment, the differential case 5 includes a differential case tubular portion 51. The differential case tubular portion 51 is formed in a tubular shape. The differential case tubular portion 51 is disposed so as to cover the tubular shaft portion 633 of the specific bevel gear 63S from the radially outer side R2. A first clearance C1 that is a clearance in the radial direction R is provided between the outer peripheral surface of the tubular shaft portion 633 and the inner peripheral surface of the differential case tubular portion 51. In this way, the specific bevel gear 63S is not supported on the differential case 5 in the radial direction R. The specific bevel gear 63S is supported in the radial direction R by an aligning action caused by meshing with the plurality of first bevel gears 62.

The specific output shaft 2S includes an engaging portion 2a. The specific bevel gear 63S includes an engaged portion 6a with which the engaging portion 2a engages. The engaging portion 2a and the engaged portion 6a engage with each other so as to restrict relative movement in the circumferential direction C and the radial direction R between the specific output shaft 2S and the specific bevel gear 63S. In the present embodiment, a portion of the specific output shaft 2S on the second axial side L2 with respect to the portion where the engaging portion 2a is formed is positioned away from the specific bevel gear 63 S (specifically, the tubular shaft portion 633). In the present embodiment, the specific output shaft 2S is disposed away from the differential case 5. In the example shown in FIG. 3, a portion of the specific output shaft 2S that faces the differential case tubular portion 51 in the radial direction R is covered from the radially outer side R2 by the tubular shaft portion 633 that is disposed with the clearance in the radial direction R from the differential case tubular portion 51.

In the present embodiment, each of the engaging portion 2a and the engaged portion 6a is composed of a plurality of spline teeth distributed in the circumferential direction C. In the present embodiment, the specific output shaft 2S is inserted from the second axial side L2 to the radially inner side R1 of the tubular shaft portion 633 of the specific bevel gear 63S. The engaging portion 2a is formed on the outer peripheral surface of the portion of the specific output shaft 2S that is inserted to the tubular shaft portion 633, and the engaged portion 6a is formed on the inner peripheral surface of the tubular shaft portion 633.

As described above, the vehicle drive device 100 is the vehicle drive device 100 including: the input member 10 drivingly connected to the driving force source D; the pair of output shafts 2 drivingly connected to the wheels W; the speed reducer 3 configured to reduce the speed of rotation of the input member 10; and the differential gear device 4 configured to distribute the rotation of the input member 10 transmitted via the speed reducer 3 to the pair of output shafts 2, in which the differential gear device 4 includes the differential case 5 and the differential gear mechanism 6 housed in the differential case 5, the differential gear mechanism 6 includes the shaft members 61 formed so as to extend along the radial direction R, the plurality of first bevel gears 62 rotatably supported by the shaft members 61 and disposed separately in the circumferential direction C, and the pair of second bevel gears 63 disposed separately on both sides of the shaft members 61 in the axial direction L and meshing with the plurality of first bevel gears 62, the pair of second bevel gears 63 is connected to the pair of output shafts 2 so as to rotate integrally with the pair of output shafts 2, and assuming that one of the pair of second bevel gears 63 that is disposed on the second axial side L2 with respect to the shaft members 61 is the specific bevel gear 63S and one of the pair of output shafts 2 that rotates integrally with the specific bevel gear 63S is the specific output shaft 2S, the engaging portion 2a provided on the specific output shaft 2S and the engaged portion 6a provided on the specific bevel gear 63S engage with each other so as to restrict relative movement in the circumferential direction C and the radial direction R between the specific output shaft 2S and the specific bevel gear 63 S, and the specific bevel gear 63S is supported on the differential case 5 in the axial direction L and is not supported on the differential case 5 in the radial direction R.

In this configuration, the specific bevel gear 63S is not supported on the differential case 5 in the radial direction R, and is supported in the radial direction R by the aligning action caused by the meshing between the specific bevel gear 63 S and the plurality of first bevel gears 62. Therefore, there is no need to provide a bearing or a fitting portion for supporting the specific bevel gear 63 S on the differential case 5 in the radial direction R. In this configuration, the engaging portion 2a of the specific output shaft 2S and the engaged portion 6a of the specific bevel gear 63S restrict the relative movement in the circumferential direction C and the radial direction R. Therefore, there is no need to provide the specific bevel gear 63S with a fitting portion to which the specific output shaft 2S is fitted and that restricts misalignment or inclination between the rotation axis of the specific output shaft 2S and the rotation axis of the specific bevel gear 63S.
As described above, with this configuration, the support structure for supporting the specific bevel gear 63S and the specific output shaft 2S on the differential case 5 can be downsized easily. Therefore, the vehicle drive device 100 can easily be downsized in the configuration including the bevel gear type differential gear device 4.

As described above, in the present embodiment, the specific bevel gear 63 S includes the bevel tooth portion 631 that meshes with the plurality of first bevel gears 62, the bevel tooth support portion 632 that is formed integrally with the bevel tooth portion 631 and supports the bevel tooth portion 631, and the tubular shaft portion 633 that is formed in the tubular shape extending from the bevel tooth support portion 632 to the second axial side L2, the differential case 5 includes the differential case tubular portion 51 that is formed in the tubular shape and is disposed so as to cover the tubular shaft portion 633 from the radially outer side R2, and the first clearance C1 that is the clearance in the radial direction R is provided between the outer peripheral surface of the tubular shaft portion 633 and the inner peripheral surface of the differential case tubular portion 51.

With this configuration, it is possible to appropriately realize the configuration in which the specific bevel gear 63S is not supported on the differential case 5 in the radial direction R. Therefore, it is possible to appropriately realize the configuration in which the specific bevel gear 63S is supported in the radial direction R by the aligning action caused by the meshing between the specific bevel gear 63 S and the first bevel gears 62.

As shown in FIG. 3, in the present embodiment, a second clearance C2 that is a clearance in the radial direction R is provided between a tooth surface of each of the plurality of first bevel gears 62 and a tooth surface of the specific bevel gear 63S. The first clearance C1 is larger than the second clearance C2. The tooth surface of the first bevel gear 62 is a surface of each of the projections and recesses defining the teeth of the first bevel gear 62 and is a surface oriented outward in a direction orthogonal to the spinning axis of the first bevel gear 62. The tooth surface of the specific bevel gear 63S is a surface of each of the projections and recesses defining the teeth of the specific bevel gear 63S and is a surface oriented to one side in the axial direction L (in this case, the first axial side L1). The second clearance C2 is a distance in the radial direction R at the portion where the tooth surface of each of the plurality of first bevel gears 62 and the tooth surface of the specific bevel gear 63S face each other in the radial direction R. In the illustrated example, part of the tip surface of the first bevel gear 62 and part of the root surface of the specific bevel gear 63S are disposed so as to face each other in the radial direction R. More specifically, the tip surface of the first bevel gear 62 and the root surface of the specific bevel gear 63S each have an inclined portion that is gradually inclined to the first axial side L1 as it is closer to the radially inner side R1. The second clearance C2 is provided between the inclined portions in the radial direction R.

In this configuration, when the specific output shaft 2S is not rotating and the first bevel gear 62 moves to the radially inner side R1 relative to the specific bevel gear 63S so that the differential case tubular portion 51 approaches the tubular shaft portion 633, the second clearance C2 becomes zero before the first clearance C1 becomes zero. Therefore, further movement of the first bevel gear 62 to the radially inner side R1 relative to the specific bevel gear 63S can be restricted. Thus, the contact of the differential case tubular portion 51 with the tubular shaft portion 633 can be avoided.

As shown in FIG. 3, in the present embodiment, the outer case 9 further includes an outer support portion 914. The outer support portion 914 is disposed on the radially outer side R2 with respect to the differential case tubular portion 51. In the example shown in FIG. 3, the outer support portion 914 is formed so as to protrude to the radially inner side R1 from an end of the first side wall portion 911 of the first case member 91 on the radially inner side R1. The outer support portion 914 is formed in an annular shape with the output rotation axis X as its axis.

In the present embodiment, the differential case 5 further includes a radial extension portion 52. The radial extension portion 52 is formed so as to extend along the radial direction R. The radial extension portion 52 is disposed on the first axial side L1 with respect to the outer support portion 914. A thrust bearing B4 that supports the radial extension portion 52 in the axial direction L is provided between a surface of the radial extension portion 52 that is oriented to the second axial side L2 and a surface of the outer support portion 914 that is oriented to the first axial side L1. In the example shown in FIG. 3, the thrust bearing B4 is a needle roller bearing. In the present embodiment, the above washer WS is provided between a surface of the radial extension portion 52 that is oriented to the first axial side L1 and a surface of the bevel tooth support portion 632 of the specific bevel gear 63 S that is oriented to the second axial side L2.

In the present embodiment, a radial bearing B5 that supports the differential case tubular portion 51 in the radial direction R is provided between the outer peripheral surface of the differential case tubular portion 51 and the inner peripheral surface of the outer support portion 914. In the example shown in FIG. 3, the radial bearing B5 is a bushing.

As described above, in the present embodiment, the outer case 9 that houses the input member 10, the speed reducer 3, and the differential gear device 4 is further provided, the outer case 9 includes the outer support portion 914 disposed on the radially outer side R2 with respect to the differential case tubular portion 51, the differential case 5 further includes the radial extension portion 52 formed so as to extend along the radial direction R and disposed on the first axial side L1 with respect to the outer support portion 914, the thrust bearing B4 that supports the radial extension portion 52 in the axial direction L is provided between the surface of the radial extension portion 52 that is oriented to the second axial side L2 and the surface of the outer support portion 914 that is oriented to the first axial side L1, and the radial bearing B5 that supports the differential case tubular portion 51 in the radial direction R is provided between the outer peripheral surface of the differential case tubular portion 51 and the inner peripheral surface of the outer support portion 914.

In this configuration, the bearings that support the differential case 5 on the outer case 9 are divided into the thrust bearing B4 that supports the differential case 5 in the axial direction L and the radial bearing B5 that supports the differential case 5 in the radial direction R. Therefore, the radial bearing B5 can be downsized easily. Thus, the structures of the differential case 5 and the outer case 9 around the radial bearing B5 can also be downsized easily.

In the present embodiment, the outer case 9 further includes an outer case tubular portion 915. The outer case tubular portion 915 is formed in a tubular shape. The outer case tubular portion 915 is disposed so as to cover the tubular shaft portion 633 from the radially outer side R2. In the present embodiment, the outer case tubular portion 915 is formed so as to protrude to the second axial side L2 from the end of the first side wall portion 911 of the first case member 91 on the radially inner side R1.

In the present embodiment, a second seal member 72 is provided to provide an oil-tight seal between the outer peripheral surface of the tubular shaft portion 633 and the inner peripheral surface of the outer case tubular portion 915. In the example shown in FIG. 3, the tubular shaft portion 633 has a protruding portion that protrudes to the second axial side L2 with respect to the differential case tubular portion 51, and the second seal member 72 is disposed between the outer peripheral surface of the protruding portion of the tubular shaft portion 633 and the inner peripheral surface of the outer case tubular portion 915. The second seal member 72 is disposed so as to overlap the engaged portion 6a of the specific bevel gear 63S in a radial view along the radial direction R. Regarding the disposition of two elements, the phrase "overlap when viewed in a specific direction" means that, when a virtual straight line parallel to the line-of-sight direction is moved in directions orthogonal to the virtual straight line, an area where the virtual straight line intersects both the two elements is present at least in part.

As described above, in the present embodiment, the outer case 9 that houses the input member 10, the speed reducer 3, and the differential gear device 4 is further provided, the outer case 9 further includes the outer case tubular portion 915 that is formed in the tubular shape and is disposed so as to cover the tubular shaft portion 633 from the radially outer side R2, the second seal member 72 is provided to provide the oil-tight seal between the outer peripheral surface of the tubular shaft portion 633 and the inner peripheral surface of the outer case tubular portion 915, and the second seal member 72 is disposed so as to overlap the engaged portion 6a in the radial view along the radial direction R.

This configuration can be realized because, as described above, the specific bevel gear 63S is not provided with a fitting portion that restricts misalignment or inclination between the rotation axis of the specific output shaft 2S and the rotation axis of the specific bevel gear 63S. With this configuration, it is possible to appropriately restrict leakage of oil inside the outer case 9 through the gap in the radial direction R between the outer peripheral surface of the tubular shaft portion 633 and the inner peripheral surface of the outer case tubular portion 915 while reducing the dimension of the vehicle drive device 100 in the axial direction L, compared to a configuration in which the second seal member 72 is offset in the axial direction L from the engaged portion 6a.

In the present embodiment, the outer case 9 that houses the input member 10, the speed reducer 3, and the differential gear device 4 is further provided, the outer case 9 includes the outer support portion 914 disposed on the radially outer side R2 with respect to the differential case tubular portion 51, and the outer support portion 914, the differential case tubular portion 51, and the engaged portion 6a are disposed so as to overlap each other in the radial view along the radial direction R.

With this configuration, the dimension of the vehicle drive device 100 in the axial direction L can easily be reduced compared to a configuration in which the outer support portion 914, the differential case tubular portion 51, and the engaged portion 6a are offset in the axial direction L.

### [Other Embodiments]

(1) The above embodiment illustrates the exemplary configuration in which the driving force source D drivingly connected to the input member 10 is the rotary electric machine 1. However, the present invention is not limited to such a configuration, and the driving force source D may be an internal combustion engine. In this case, the rotary electric machine 1 may be omitted and the wheels W may be driven using only the driving force of the internal combustion engine. Alternatively, the wheels W may be driven using the driving forces of both the internal combustion engine and the rotary electric machine, that is, the vehicle drive device 100 may be a drive device for a hybrid vehicle.
(2) The above embodiment illustrates the exemplary configuration in which the input member 10, the pair of output shafts 2, the speed reducer 3, and the differential gear device 4 are disposed coaxially and the input member 10, the speed reducer 3, and the differential gear device 4 are disposed in the stated order from the first axial side L1 to the second axial side L2. However, the present invention is not limited to such a configuration, and at least one of the input member 10, the pair of output shafts 2, the speed reducer 3, and the differential gear device 4 may be disposed on a different axis. The disposition order of the input member 10, the speed reducer 3, and the differential gear device 4 in the axial direction L may be different from the above order.
(3) The above embodiment illustrates the exemplary configuration in which the speed reducer 3 is the planetary gear mechanism disposed on the output rotation axis X. However, the present invention is not limited to such a configuration. For example, the speed reducer 3 may be a counter gear mechanism instead of the planetary gear mechanism. In this configuration, the counter gear mechanism is disposed on the output rotation axis X and on an axis different from the output rotation axis X.
(4) The above embodiment illustrates the exemplary configuration in which the speed reducer 3 is the planetary gear mechanism including the sun gear SG, the carrier CR, the first ring gear RG1, and the second ring gear RG2. However, the present invention is not limited to such a configuration, and the speed reducer 3 may be, for example, a single-pinion type planetary gear mechanism.
(5) The above embodiment illustrates the exemplary configuration in which the thrust bearing B4 that supports the radial extension portion 52 in the axial direction L is provided between the surface of the radial extension portion 52 that is oriented to the second axial side L2 and the surface of the outer support portion 914 that is oriented to the first axial side L1, and the radial bearing B5 that supports the differential case tubular portion 51 in the radial direction R is provided between the outer peripheral surface of the differential case tubular portion 51 and the inner peripheral surface of the outer support portion 914. However, the present invention is not limited to such a configuration. For example, ball bearings that support the differential case 5 in the axial direction L and the radial direction R may be provided between the surface of the differential case 5 that is oriented to the second axial side L2 and the surface of the outer support portion 914 that is oriented to the first axial side L1 and between the outer peripheral surface of the differential case 5 and the inner peripheral surface of the outer support portion 914.
(6) The above embodiment illustrates the exemplary configuration in which the second seal member 72 is disposed so as to overlap the engaged portion 6a in the radial view along the radial direction R. However, the present invention is not limited to such a configuration. For example, the second seal member 72 may be disposed on the second axial side L2 with respect to the engaged portion 6a.
(7) The above embodiment illustrates the exemplary configuration in which the outer support portion 914, the differential case tubular portion 51, and the engaged portion 6a are disposed so as to overlap each other in the radial view along the radial direction R. However, the present invention is not limited to such a configuration. For example, the engaged portion 6a may be disposed on the second axial side L2 with respect to the outer support portion 914 and the differential case tubular portion 51.
(8) The configuration disclosed in each of the above embodiments can be applied in combination with any of the configurations disclosed in the other embodiments as long as no contradiction arises. Regarding the other configurations as well, the embodiments disclosed herein are merely illustrative in all respects. Therefore, various modifications can be made as appropriate without departing from the spirit of the present disclosure.

### [Summary of Embodiment]

Hereinafter, a summary of the vehicle drive device (100) described above will be provided.

The vehicle drive device (100) is a vehicle drive device (100) including: an input member (10) drivingly connected to a driving force source (D); a pair of output shafts (2) drivingly connected to wheels (W); a speed reducer (3) configured to reduce a speed of rotation of the input member (10); and a differential gear device (4) configured to distribute the rotation of the input member (10) transmitted via the speed reducer (3) to the pair of output shafts (2), in which, assuming that an axial direction (L) is a direction along an output rotation axis (X) that is a rotation axis of the pair of output shafts (2), a first axial side (L1) is one side in the axial direction (L), a second axial side (L2) is the other side in the axial direction (L), a radial direction (R) is a direction orthogonal to the output rotation axis (X), and a circumferential direction (C) is a direction about the output rotation axis (X), the differential gear device (4) includes a differential case (5) and a differential gear mechanism (6) housed in the differential case (5), the differential gear mechanism (6) includes a shaft member (61) formed so as to extend along the radial direction (R), a plurality of first bevel gears (62) rotatably supported by the shaft member (61) and disposed separately in the circumferential direction (C), and a pair of second bevel gears (63) disposed separately on both sides of the shaft member (61) in the axial direction (L) and meshing with the plurality of first bevel gears (62), the pair of second bevel gears (63) is connected to the pair of output shafts (2) so as to rotate integrally with the pair of output shafts (2), and assuming that one of the pair of second bevel gears (63) that is disposed on the second axial side (L2) with respect to the shaft member (61) is a specific bevel gear (63 S) and one of the pair of output shafts (2) that rotates integrally with the specific bevel gear (63 S) is a specific output shaft (2S), an engaging portion (2a) provided on the specific output shaft (2S) and an engaged portion (6a) provided on the specific bevel gear (63S) engage with each other so as to restrict relative movement in the circumferential direction (C) and the radial direction (R) between the specific output shaft (2S) and the specific bevel gear (63S), and the specific bevel gear (63S) is supported on the differential case (5) in the axial direction (L) and is not supported on the differential case (5) in the radial direction (R).

In this configuration, the specific bevel gear (63 S) is not supported on the differential case (5) in the radial direction (R), and is supported in the radial direction (R) by an aligning action caused by meshing between the specific bevel gear (63 S) and the plurality of first bevel gears (62). Therefore, there is no need to provide a bearing or a fitting portion for supporting the specific bevel gear (63 S) on the differential case (5) in the radial direction (R).
In this configuration, the engaging portion (2a) of the specific output shaft (2S) and the engaged portion (6a) of the specific bevel gear (63 S) restrict the relative movement in the circumferential direction (C) and the radial direction (R). Therefore, there is no need to provide the specific bevel gear (63 S) with a fitting portion to which the specific output shaft (2S) is fitted and that restricts misalignment or inclination between the rotation axis of the specific output shaft (2S) and the rotation axis of the specific bevel gear (63S).
As described above, with this configuration, the support structure for supporting the specific bevel gear (63 S) and the specific output shaft (2S) on the differential case (5) can be downsized easily. Therefore, the vehicle drive device (100) can easily be downsized in the configuration including the bevel gear type differential gear device (4).

It is preferable that the specific bevel gear (63 S) include a bevel tooth portion (631) that meshes with the plurality of first bevel gears (62), a bevel tooth support portion (632) that is formed integrally with the bevel tooth portion (631) and supports the bevel tooth portion (631), and a tubular shaft portion (633) that is formed in a tubular shape extending from the bevel tooth support portion (632) to the second axial side (L2), the differential case (5) include a differential case tubular portion (51) that is formed in a tubular shape and is disposed so as to cover the tubular shaft portion (633) from an outer side (R2) in the radial direction (R), and a first clearance (C 1) that is a clearance in the radial direction (R) be provided between an outer peripheral surface of the tubular shaft portion (633) and an inner peripheral surface of the differential case tubular portion (51).

With this configuration, it is possible to appropriately realize the configuration in which the specific bevel gear (63S) is not supported on the differential case (5) in the radial direction (R). Therefore, it is possible to appropriately realize the configuration in which the specific bevel gear (63 S) is supported in the radial direction (R) by the aligning action caused by the meshing between the specific bevel gear (63 S) and the first bevel gears (62).

In the configuration in which the first clearance (C1) is provided between the outer peripheral surface of the tubular shaft portion (633) and the inner peripheral surface of the differential case tubular portion (51), it is preferable that a second clearance (C2) that is a clearance in the radial direction (R) be provided between a tooth surface of each of the plurality of first bevel gears (62) and a tooth surface of the specific bevel gear (63 S), and the first clearance (C1) be larger than the second clearance (C2).

In this configuration, when the specific output shaft (2S) is not rotating and the first bevel gear (62) moves to an inner side (R1) in the radial direction (R) relative to the specific bevel gear (63 S) so that the differential case tubular portion (51) approaches the tubular shaft portion (633), the second clearance (C2) becomes zero before the first clearance (C1) becomes zero. Therefore, further movement of the first bevel gear (62) to the inner side (R1) in the radial direction (R) relative to the specific bevel gear (63 S) can be restricted. Thus, the contact of the differential case tubular portion (51) with the tubular shaft portion (633) can be avoided.

It is preferable that the vehicle drive device (100) further include an outer case (9) that houses the input member (10), the speed reducer (3), and the differential gear device (4), the outer case (9) further include an outer case tubular portion (915) that is formed in a tubular shape and is disposed so as to cover the tubular shaft portion (633) from the outer side (R2) in the radial direction (R), a seal member (72) be provided to provide an oil-tight seal between the outer peripheral surface of the tubular shaft portion (633) and an inner peripheral surface of the outer case tubular portion (915), and the seal member (72) be disposed so as to overlap the engaged portion (6a) in a radial view along the radial direction (R).

This configuration can be realized because, as described above, the specific bevel gear (63 S) is not provided with a fitting portion that restricts misalignment or inclination between the rotation axis of the specific output shaft (2S) and the rotation axis of the specific bevel gear (63 S). With this configuration, it is possible to appropriately restrict leakage of oil inside the outer case (9) through a gap in the radial direction (R) between the outer peripheral surface of the tubular shaft portion (633) and the inner peripheral surface of the outer case tubular portion (915) while reducing the dimension of the vehicle drive device (100) in the axial direction (L), compared to a configuration in which the second seal member (72) is offset in the axial direction (L) from the engaged portion (6a).

It is preferable that the vehicle drive device (100) further include an outer case (9) that houses the input member (10), the speed reducer (3), and the differential gear device (4), the outer case (9) include an outer support portion (914) disposed on the outer side (R2) in the radial direction (R) with respect to the differential case tubular portion (51), and the outer support portion (914), the differential case tubular portion (51), and the engaged portion (6a) be disposed so as to overlap each other in a radial view along the radial direction (R).

With this configuration, the dimension of the vehicle drive device (100) in the axial direction (L) can easily be reduced compared to a configuration in which the outer support portion (914), the differential case tubular portion (51), and the engaged portion (6a) are offset in the axial direction (L).

### INDUSTRIAL APPLICABILITY

The technology disclosed herein is applicable to a vehicle drive device including an input member drivingly connected to a driving force source, a pair of output shafts drivingly connected to wheels, a speed reducer that reduces the speed of rotation of the input member, and a differential gear device that distributes the rotation of the input member transmitted via the speed reducer to the pair of output shafts.

### Description of the Reference Numerals

100: vehicle drive device, 10: input member, 2: output shaft, 2S: specific output shaft, 2a: engaging portion, 3: speed reducer, 4: differential gear device, 5: differential case, 51: differential case tubular portion, 52: radial extension portion, 6: differential gear mechanism, 6a: engaged portion, 61: shaft member, 62: first bevel gear, 63: second bevel gear, 63S: specific bevel gear, 631: bevel tooth portion, 632: bevel tooth support portion, 633: tubular shaft portion, 72: second seal member (seal member), 9: outer case, 914: outer support portion, 915: outer case tubular portion, D: driving force source, B4: thrust bearing, B5: radial bearing, W: wheel, L: axial direction, L1: first axial side, L2: second axial side, R: radial direction, R1: radially inner side, R2: radially outer side, C: circumferential direction

## Claims

1. A vehicle drive device comprising:
an input member drivingly connected to a driving force source;
a pair of output shafts drivingly connected to wheels;
a speed reducer configured to reduce a speed of rotation of the input member; and
a differential gear device configured to distribute the rotation of the input member transmitted via the speed reducer to the pair of output shafts, wherein
assuming that an axial direction is a direction along an output rotation axis that is a rotation axis of the pair of output shafts, a first axial side is one side in the axial direction, a second axial side is the other side in the axial direction, a radial direction is a direction orthogonal to the output rotation axis, and a circumferential direction is a direction about the output rotation axis,
the differential gear device includes a differential case and a differential gear mechanism housed in the differential case,
the differential gear mechanism includes a shaft member formed so as to extend along the radial direction, a plurality of first bevel gears rotatably supported by the shaft member and disposed separately in the circumferential direction, and a pair of second bevel gears disposed separately on both sides of the shaft member in the axial direction and meshing with the plurality of first bevel gears,
the pair of second bevel gears is connected to the pair of output shafts so as to rotate integrally with the pair of output shafts, and
assuming that one of the pair of second bevel gears that is disposed on the second axial side with respect to the shaft member is a specific bevel gear and one of the pair of output shafts that rotates integrally with the specific bevel gear is a specific output shaft,
an engaging portion provided on the specific output shaft and an engaged portion provided on the specific bevel gear engage with each other so as to restrict relative movement in the circumferential direction and the radial direction between the specific output shaft and the specific bevel gear, and
the specific bevel gear is supported on the differential case in the axial direction and is not supported on the differential case in the radial direction.

2. The vehicle drive device according to claim 1, wherein:
the specific bevel gear includes a bevel tooth portion that meshes with the plurality of first bevel gears, a bevel tooth support portion that is formed integrally with the bevel tooth portion and supports the bevel tooth portion, and a tubular shaft portion that is formed in a tubular shape extending from the bevel tooth support portion to the second axial side;
the differential case includes a differential case tubular portion that is formed in a tubular shape and is disposed so as to cover the tubular shaft portion from an outer side in the radial direction; and
a first clearance that is a clearance in the radial direction is provided between an outer peripheral surface of the tubular shaft portion and an inner peripheral surface of the differential case tubular portion.

3. The vehicle drive device according to claim 2, wherein:
a second clearance that is a clearance in the radial direction is provided between a tooth surface of each of the plurality of first bevel gears and a tooth surface of the specific bevel gear; and
the first clearance is larger than the second clearance.

4. The vehicle drive device according to claim 2 or 3, further comprising an outer case that houses the input member, the speed reducer, and the differential gear device, wherein
the outer case further includes an outer case tubular portion that is formed in a tubular shape and is disposed so as to cover the tubular shaft portion from the outer side in the radial direction,
a seal member is provided to provide an oil-tight seal between the outer peripheral surface of the tubular shaft portion and an inner peripheral surface of the outer case tubular portion, and
the seal member is disposed so as to overlap the engaged portion in a radial view along the radial direction.

5. The vehicle drive device according to claim 2 or 3, further comprising an outer case that houses the input member, the speed reducer, and the differential gear device, wherein
the outer case includes an outer support portion disposed on the outer side in the radial direction with respect to the differential case tubular portion, and
the outer support portion, the differential case tubular portion, and the engaged portion are disposed so as to overlap each other in a radial view along the radial direction.
